# EUROPEAN PATENT APPLICATION

(11) **EP 4 827 054 A2**
(43) Date of publication of application: **21.10.2026**
(21) Application number: 26203561.1
(22) Date of filing: 29.10.2018
(51) Int. Cl.: H04L 9/40

(54) **ARITHMETIC ENHANCEMENT OF C-LIKE SMART CONTRACTS FOR VERIFIABLE COMPUTATION**

(30) Priority: 09.11.2017 GB 201718505; 30.11.2017 GB 201719998; 13.12.2017 GB 201720768; 02.02.2018 GB 201801753; 10.04.2018 GB 201805948; 20.04.2018 GB 201806444
(62) Document number(s) of the earlier application(s) in accordance with Art. 76 EPC: 23216404.6 / 4 312 403; 18796783.1 / 3 707 852
(71) Applicant: nChain Licensing AG, 6300 Zug (CH)
(72) Inventor: COVACI, Alexandra, Cardiff, CF10 2HH (GB); MADEO, Simone, Cardiff, CF10 2HH (GB); MOTYLINSKI, Patrick, Cardiff, CF10 2HH (GB); VINCENT, Stephane, Cardiff, CF10 2HH (GB)
(74) Representative: Gill Jennings & Every LLP

(57) **Abstract**

The invention provides systems and methods for converting high level source code into an arithmetic circuit which represents the functionality expressed in the source code. The invention comprises a translation/interpretation component for performing this conversion. In a preferred embodiment, the source code is a smart contract such as those used in relation to a blockchain platform. The invention could be used in relation to the Bitcoin network, for example. A method in accordance with an embodiment comprises the steps of: processing a portion of high level source code (e.g. a smart contract) to generate an arithmetic circuit. The arithmetic circuit comprises one or more arithmetic gates arranged to represent at least some of the functionality expressed in the source code. The processing involves evaluating one or more constants provided in the source code to produce one or more expressions that include Boolean and/or arithmetic operators. The arithmetic circuit comprises n-bit wires connected to arithmetic gates; it can be used to provide a hardware and/or software circuit. The arithmetic circuit can be used to generate a quadratic program which can be executed upon a processor.

## Description

This invention relates generally to the field of tools, techniques and systems for converting high level source code into another form e.g. interpreters. It also relates to blockchain technologies and, in particular, it relates to tools for building blockchain-implemented solutions. It also relates to the improved generation of machine-executable technologies such as, for example, smart contracts that are arranged to execute on a blockchain.

### Background of Invention

In this document, the term "blockchain" refers to any of several types of electronic, computer-based, distributed ledgers. These include consensus-based blockchain and transaction-chain technologies, permissioned and unpermissioned ledgers, shared ledgers and variations thereof. It also includes private and public blockchains.

The most widely known application of blockchain technology is the Bitcoin ledger, although other blockchain implementations have been proposed and developed. While the example of Bitcoin may be referred to in the present disclosure, for the purpose of convenience and illustration, it should be noted that the invention is not limited to use with any particular implementation or variant of the Bitcoin blockchain or associated protocol, and alternative blockchain implementations and protocols fall within the scope of the present invention

A blockchain is a peer-to-peer, electronic ledger which is implemented as a computer-based decentralised system made up of blocks which in turn are made up of transactions. Each transaction is a data structure that encodes the transfer of control of a digital asset between participants in the blockchain system, and includes at least one input and at least one output. Each block contains a hash of the previous block to that blocks become chained together to create a permanent, unalterable record of all transactions which have been written to the blockchain since its inception.

The scripting language of the Bitcoin blockchain, known as Script, is stack based. Items can be pushed onto and popped off the top of the stack. For example, an OP_EQUAL operation pops the top two items from the stack, compares them, and pushes a result (e.g., 1 if equal or 0 if unequal) to the top of the stack. In some scripting languages employed by some of the present embodiments, there may be at least two stacks: a main stack and an alternate stack.

In order for a transaction to be written to the blockchain, it must be "validated". Network nodes (miners) perform work to ensure that each transaction is valid, with invalid transactions rejected from the network. A node can have standards for validity different from other nodes. Because validity in the blockchain is consensus based, a transaction is considered valid if a majority of nodes agree that a transaction is valid. Software clients installed on the nodes perform this validation work on transactions referencing an unspent transaction (UTXO) in part by executing the UTXO locking and unlocking scripts. If execution of the locking and unlocking scripts evaluates to TRUE and other validation conditions, if applicable, are met, the transaction is validated by the node. The validated transaction is propagated to other network nodes, whereupon a miner node can select to include the transaction in a blockchain.

Thus, in order for a transaction to be written to the blockchain, it must be i) validated by the first node that receives the transaction -- if the transaction is validated, the node relays it to the other nodes in the network; and ii) it is added to a new block built by a miner; and iii) mined, i.e., added to the public ledger of past transactions. The transaction is considered to be confirmed when a sufficient number of blocks is added to the blockchain to make the transaction practically irreversible.

Although blockchain technology is most widely known for the use of cryptocurrency implementation, digital entrepreneurs have begun exploring the use of both the cryptographic security system Bitcoin is based on and the data that can be stored on the blockchain to implement new systems. It would be highly advantageous if the blockchain could be used for automated tasks and processes that are not limited to the realm of cryptocurrency. Such solutions would be able to harness the benefits of the blockchain (e.g., a permanent, tamper proof records of events, distributed processing etc.) while being more versatile in their applications.

One area of current research is the use of the blockchain for the implementation of "smart contracts". These are computer programs designed to automate the execution of the terms of a machine-readable contract or agreement. Unlike a traditional contract, which would be written in natural language, a smart contract is a machine executable program that comprises rules that can process inputs in order to produce results, which can then cause actions to be performed dependent upon those results.

In embodiments, a smart contract is "smart" in the sense that the creator, or some other specific entity, is not required for enforcement and/or execution of the smart contract. Human interaction is not required for execution or enforcement. That is, although interaction with specific entities can be encoded at specific steps in the smart contract, the smart contract can otherwise be automatically executed and self-enforced. It is machine readable and executable. In some examples, automatic execution refers to any entity being able to spend the UTXO and having an incentive (e.g., reward) to do so. Note that in such examples, the "any entity" that is able to spend the UTXO refers to an entity that is able to create the unlocking script without being required to prove knowledge of some secret. In other words, the spending transaction can be validated without verifying that the source of the data has access to a cryptographic secret (e.g., private asymmetric key, symmetric key, etc.). In addition, in such examples, self-enforcement refers to the validation nodes of the blockchain network being caused to enforce the spending transaction according to the constraints. In some examples, "spending" a UTXO refers to creating a spending transaction that references the UTXO and executes as valid.

Thus, there is a great deal of interest surrounding the uses to which blockchain technology can be put, beyond being simply a vehicle for cryptocurrency payments. This includes control of IoT devices, intelligent systems incorporating A.I. techniques and more.

However, while there are many people skilled in the art of programming using high level languages such as C, C++, Java etc, those capable of creating applications for the blockchain are comparatively few in numbers. This is partly because of the current need to code for the blockchain at relatively low level, using op_codes which manipulate the main and alt stacks. In particular, programming of smart contracts for implementation of a blockchain is known to be difficult and error prone - as explored in Delmolino, K., et al. (2015). Step by Step Towards Creating a Safe Smart Contract: Lessons and Insights from a Cryptocurrency Lab, and Juels, A., et al. (2013). The Ring of Gyges: Using Smart Contracts for Crime.

By enabling the creation of solutions and applications which can be used in conjunction with a blockchain, an improved blockchain and associated platform is provided. A solution for the calculation of arithmetic gates is also provided. The arithmetic circuit may be arranged for execution as or of a predicate. The invention enables the creation and encoding of an executable program (as opposed to merely providing a verification or proof as per prior art disclosures).

### Summary of Invention

Thus, it is desirable to provide methods and systems that improve blockchain and distributed computing technology in one or more aspects. Such an improved solution has now been devised. Thus, in accordance with the present invention there are provided methods and systems as defined in the appended claims.

The invention may include systems and methods arranged to provide and facilitate programmability in a decentralized system. It may, for example, be a cryptocurrency system, a blockchain-implemented system and/or a distributed computation system. From one perspective, it reduces errors, time, effort, cost and resources required during the programming process. Thus, it provides a technical solution to a technical problem. From another perspective, it provides an enhanced blockchain solution because of the reduction in errors and bugs. It also preserves software integrity.

Advantageously, unlike known interpreters and compilers, the invention provides an architecture-independent solution. Moreover, it does not require the use of a virtual machine (VM) to enable execution.

The invention may provide computer-implemented systems and methods which take source code as input and produce an arithmetic circuit . The resulting circuit C may be a representation of the functionality of the HLL source code (as opposed to a proof for verification). When executed, the arithmetic circuit C may provide a result of a computation which may then be verified. The circuit C may be machine executable or processed for execution on a machine. The source code may express or represent a computation.

This circuit may consist of "wires" that carry values from a field **F** and connect to addition and multiplication gates. The arithmetic circuit could be embodied in software, and/or a physical circuit having wires and logic gates. The source code may comprise or represent some or all of the functionality or computation 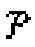 written in a HLL or GPL. The invention may be described as an interpreter for converting that computation into an arithmetic circuit . The arithmetic circuit 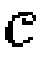 and some input *x* may be supplied to an entity for execution.

The invention may convert or translate a computation, expressed in source code, into a predicate that can be executed (by a machine/processor). The (HLL/GPL) source code may be pre-compiled or pre-processed.

In one or more embodiments, a public evaluation key *EK* and a public verification key *VK* may be derived using a secret value s. The method may comprise the step of using *EK* and *VK* to evaluate the computation on a particular input *x.* An output *y,* the values of one or more circuit wires and *EK* may be used to produce a proof-of-correctness π. The proof π may be stored on a blockchain. It may be stored in a blockchain transaction. The method may comprise the step of providing the proof in a blockchain transaction. It may comprise the step of submitting the transaction to the blockchain and/or storing it on the blockchain.

The method may comprise the step of verifying the proof stored on the blockchain. It may be verified by one or more parties. Advantageously, it may be verified by multiple parties without requiring a prover to separately interact with each of the parties. This provides a more efficient and quicker solution compared to the prior art.

All or some of the nodes in a blockchain network (eg bitcoin) may verify the transaction. The verification may be performed using the public verification key VK and the proof π in order to verify a smart contract.

An advantage of the present invention is that miners verify transactions in accordance with the known, conventional blockchain protocols. The verification process is part of the miners' role within the network. Therefore, the invention is able to use efforts made by the nodes to technical advantage, as the verification is performed as part of required, existing operations. This provides an efficient arrangement compared to the prior art.

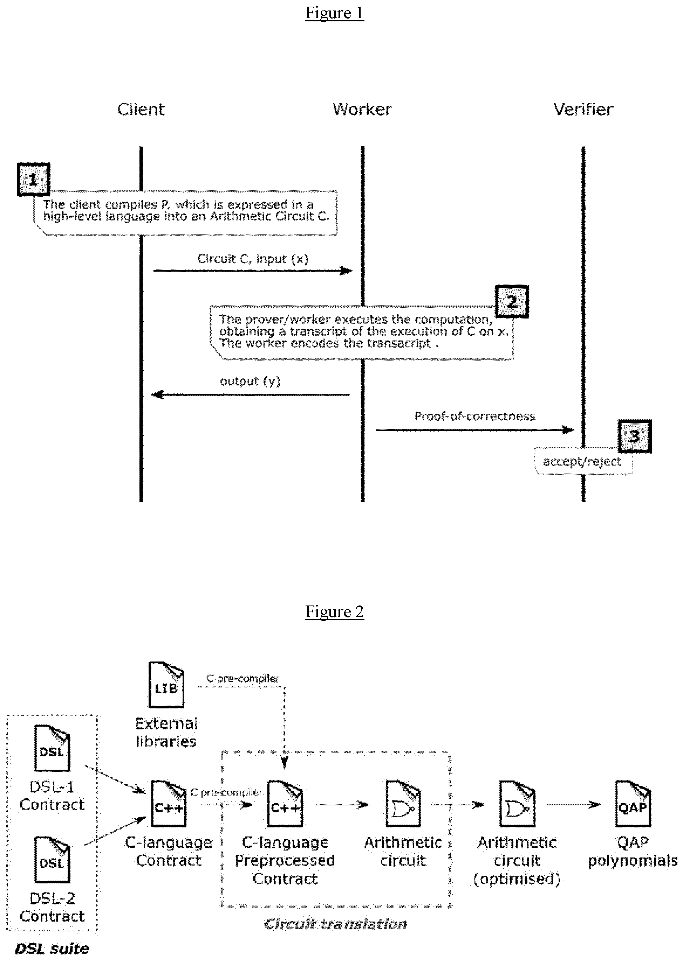

In some embodiments, the invention may form part of a workflow from a smart contract encoded in a DSL to a quadratic arithmetic program (QAP), as shown in Figure 1.

As shown in Figure 2, a Domain Specific Language (DSL) smart contract may be converted into a High Level Language contract. The DSL smart contract may be written in a formal language having precise semantics. The DSL smart contract may include a set of conditions. The outcome of the DSL smart contract may depend on fulfilment of the set of conditions.

A HLL precompiler (which may also be referred to as a pre-processor) may incorporate external libraries referenced by the HLL contract to produce a HLL pre-processed contract. The HLL precompiler may be referred to as a C pre-compiler in Figure 2. The HLL contract may be referred to as a C-language contract in figure 2.

The HLL pre-processed contract (i.e. the source code) may then be transformed into an arithmetic circuit in accordance with an embodiment of the present invention. This arithmetic circuit may be optimised to produce a reduced arithmetic circuit from which QAP polynomials are derived.

The pre-processing conversion may be performed by a software program (program called the C pre-compiler in Figure 2) that, as a result of execution, receives a set of conditions, such as the DSL smart contract, written in a DSL and translates the DSL code into HLL source code, such as the HLL contract. This may be referred to in Figure 2 as the "C-language preprocessed contract". It may also be referred to herein as simply "the source code". The HLL contract may be a HLL program, such as a C++ program, that contains the contract defined in the DSL smart contract. The HLL precompiler may be a computer-executable program that processes the HLL contract and the required external libraries to produce the stand-alone HLL pre-processed contract (i.e. the source code).

The external libraries may be collections of pre-written subroutines, functions, classes, containers, values, and/or variable types utilised by the HLL contract by invocation. For example, by invoking the external libraries, the HLL contract gains the functionality of that library without having to implement the functionality itself. The HLL pre-processed contract may include a set of expressions and operators. The operators may include arithmetic operators (e.g., addition (+), multiplication (*), etc.), comparison operators (e.g., less than (<), equality (==), greater than or equal to (>=) etc.), conditional statements (e.g., if-then (?, :)), or logic operators (e.g., AND (&&), OR (∥), NOT (!), XOR (⊕), etc.). In some embodiments, the main function (point of entry) has a predefined name and format.

The arithmetic circuit may be a directed acyclic graph DAG over a set of variables. Every node of the DAG with an indegree of zero may be an input gate representing a variable (e.g., ), and every other node of the DAG maybe a sum gate (+) or a product gate (×). Every gate (node) may have an outdegree of one, so the underlying graph may be a directed tree. The arithmetic circuit may have two measures of complexity: size and depth. In some examples, a "size" of an arithmetic circuit may be based on a number of gates within the arithmetic circuit. In some examples, "depth" of the arithmetic circuit may be based on the length of the longest directed path within the arithmetic circuit.

After the arithmetic circuit is generated, it may be reduced.

A computer-implemented method in accordance with the present invention may comprise the step of processing a portion of source code to generate an (executable) arithmetic circuit. The source code may be written in a high level programming language; and the arithmetic circuit may comprise one or more arithmetic gates arranged to represent some functionality or computation expressed in the source code.

This is in contrast to compilers and interprets known in the prior art, which do not convert HLL source code into an arithmetic circuit.

The arithmetic circuit may be executed on a processor. The circuit may be provided in a blockchain transaction.

This contrasts with prior art disclosures which teach the verification of a computation or logic circuit, and/or lead to the output of a (zero knowledge) proof. For example, the *Pinocchio* system generates a zero-knowledge proof for verifying general computations - "Communications of the ACM"; Vol. 59, No 2; 2016 Parno B, et al; "Pinocchio: Nearly Practical Verifiable Computations"; 103-112 (Parno). Thus, which prior art verification systems such as *Pinocchio* can be used in conjunction with the present invention for purposes of verification, the invention provides functionality and results which extend beyond the prior art.

Thus, the invention provides a machine executable output which represents and/or provides a computation. This may then be verified. This is in contrast with, for example, the *Pinocchio* system which compiles a verification script in order to *validate* a (separate) program that is arranged to perform the computation, thus comprising a two-part process. Instead, the present invention uses a one-part approach i.e. compiling the high level *computation* itself into an arithmetic circuit. Thus, the invention solves a different technical problem, using a very different approach, from such prior art.

Preferably, the source code is a smart contract. The source code may be pre-processed as described above.

Preferably, the processing step comprises the sub-step of evaluating one or more constants provided in the source code. This may provide one or more expressions comprising Boolean and/or arithmetic operators.

The method may further comprise the step of: using the arithmetic circuit to provide a hardware and/or software circuit. The arithmetic circuit may comprise n-bit wires connected to arithmetic gates. The arithmetic circuit is architecture independent. That is to say, it is not arranged for operation or use with a particular hardware or software architecture or platform. It does not require the use of a Virtual Machine. This is in contrast to prior art compilers and interpreters which are either architecture specific or require the use of a VM.

The method may further comprise the step of: pre-processing the source code to determine one or more constants. The pre-processing may comprise one or more of the following steps:
removing comments; importing header declarations from header files to the source files; merging multiple source files;
solving or evaluating directive and macros.

The method may further comprise the step of detecting all global variables declared in the source code, wherein a global variable relates to a function, a structure or class, a constant and/or an entry point for execution.

The method may further comprise the step of: generating a table of symbols (identifiers) to associate each symbol (i.e. identifier) provided in the source code with declaration information provided in the source code. The symbols in the table may be global and or local symbols.

The method may further comprise the step of: performing a line-by-line evaluation of the source code which results in an arithmetic and/or logic expression which expresses one or more out variables as a combination of logic and/or arithmetic operations applied on one or more input variables.

This may further comprise the step of: decoding of types; decoding of expressions; evaluation of expressions; and/or allocation of memory for data structures required by said functionality.

The method may further comprise the step of: mapping the arithmetic and/or logic operations of the expression to arithmetic gates. The mapping step may comprise the sub-step of: performing a wire expansion; and/or performing a wire compression.

The method may further comprise the step of: using the arithmetic circuit to generate a quadratic program comprising a set of polynomials which provide a description of the circuit. This method may further comprising the step of providing the quadratic program to an entity for execution of the quadratic program using one or more inputs.

The invention may also provide a system arranged to implement or execute any of the method steps described above. The system may comprise a translation or conversion component (i.e. an interpreter/compiler) arranged to perform the processing of the source code. Although compilers for the generation of (zero knowledge) proofs are known in the art (e.g. see "Pinocchio: Nearly Practical Verifiable Computations" (Parno) as referenced above) these do not compile into arithmetic circuit as per the present invention. The invention generates an answer rather than a proof or verification of the answer.

A computer-implemented system comprising:
a processor; and
memory including executable instructions that, as a result of execution by the processor, causes the system to perform any embodiment of the computer-implemented method one or more embodiments of the invention/method as described or claimed herein. The instructions may comprise instructions for providing a translation or conversion component (i.e. an interpreter/compiler) arranged to perform the processing of the source code.

A non-transitory computer-readable storage medium having stored thereon executable instructions that, as a result of being executed by a processor of a computer system, cause the computer system to at least perform one or more embodiments of the invention/method as described or claimed herein.

These and other aspects of the present invention will be apparent from and elucidated with reference to, the embodiment described herein. An embodiment of the present invention will now be described, by way of example only, and with reference to the accompany drawings, in which:
Figure 1 illustrates a protocol of the verifiable computation and actors involved in an illustrative use and embodiment of the invention. These actors are the: Client, Worker (also known as the "prover") and Verifier.
Figure 2 shows the translation process from DSL contracts to Quadratic Arithmetic Programs (QAPs) in accordance with an embodiment of the invention.
Figure 3 shows an example of an arithmetic circuit in accordance with an embodiment of the invention.
Figure 4 shows a high-level description of a packet (header + body) containing a circuit representation in accordance with an embodiment of the invention.
Figure 5 shows an implementation of a 4-bit wire expander representing the statement "Check if variable <a> is even", as per the example described below.
Figure 6 shows a building block in accordance with an illustrative implementation of the invention, wherein the building block implements a conditional statement.
Figure 7 illustrates how a constants generator module in accordance with an embodiment of the invention may be responsible for the creation of the constants used by the arithmetic circuit. In the example used, three constants (C₁, C₂ and C₃) plus default one (1) and zero (0) values are generated.
Figure 8 is a schematic diagram illustrates a computing environment in which various embodiments can be implemented.

### Overview

We now provide an illustration of how the invention may be put into working practice according to one embodiment. In this example, we describe a possible implementation of an interpreter arranged to convert a high-level language contract (e.g. C/C++ language) to a circuit comprising arithmetic gates. However, the invention may be arranged to translate other HLL languages. Specific structures or *building blocks* can be used to facilitate this conversion. In one or more embodiments, this representation can be seen as the first step for the construction of a comprehensive pipeline able to provide a distributed verifiable computation.

The building blocks presented in this example are not intended to be an exhaustive list of all possible high-level language constructs handled by an embodiment of the invention. Moreover, alternate implementations of the presented examples can be provided. These fall within the scope of the person skilled in the art.

We now provide an illustrative embodiment of the invention. It is important to note, however, that this is an example of an application to which the invention may be put to use. The skilled person will understand that the invention can be put to advantageous use in other contexts and applications. The invention is not limited to use in relation to smart contracts or financial instruments.

### Illustrative Embodiment of the Invention & Example Use case

For our example, consider a protocol which allows users to generate contracts for financial instruments using a Domain Specific Language (DSL). Once the contract has been generated, its execution can be outsourced to untrusted parties (called "workers" or "provers"), while its correctness can be publicly verified. The protocol makes use of cryptographic primitives that ensure:
- *Completeness*, i.e. the honest verifier will be convinced of the validity of the output if the protocol is correctly followed;
- *Soundness*, i.e. no cheating prover can convince the honest verifier about the authenticity of the output;
- *Zero-knowledge*, i.e. no cheating verifier learns anything other than the validity of the output.

The principal benefits of the protocol are:
- Man-in-the-middle attacks are prevented since no communication between the participants is requested.
- It makes hard for malicious nodes to tamper with the data due to the use of the blockchain technologies.
- Trusted third parties such as trusted hardware devices are avoided
- Contract validations do not imply code re-execution. Computations are not replicated by every node in the network. Instead, proofs of honest execution are stored in the public blockchain and used for validation purposes only.

Such a system would be capable of handling various types of smart contracts, corresponding to various types of tasks and products, and not limited to financial applications or uses. Due to its decentralized and distributed nature, the (Bitcoin) blockchain provides a well-suited environment for settling agreements between two or more parties.

Such a system needs to provide and facilitate programmability in a decentralized cryptocurrency system. However, it is recognised in the art that smart contract programming is an error-prone process. See Delmolino, K., et al. (2015). Step by Step Towards Creating a Safe Smart Contract: Lessons and Insights from a Cryptocurrency Lab, and Juels, A., et al. (2013). The Ring of Gyges: Using Smart Contracts for Crime.

Therefore, it would be advantageous to be able to use DSLs that make smart contracts easier to write and to read by programmers, thus reducing error, reducing time, effort, cost and resources during the programming process. Ideally, non-specialist programmers would be able to write contracts without having to implement any cryptography. Instead, a compiler/interpreter would automatically compile the source code to a cryptographic protocol between the users and the blockchain. These are among the technical problems solved by the present invention. Such advantages are not provided by prior art techniques for verification and generation of proofs.

The framework uses state-of-the-art cryptographically verifiable computations ( see Gennaro, R., et al. (2013). Quadratic Span Programs and Succint NIZKs without PCPs) and ensures correct function evaluation: an adversary obtaining sensitive information will be unable to manipulate the results thanks to the use of verifiable computations. This model makes use of blockchain technologies to store proof-of-correctness and it combines the "correct-by-construction" cryptography approach with smart contracts.

In this example, we focus on an implementation of a translation component able to convert a high-level language contract (e.g. C/C++ language) to a circuit comprising arithmetic gates. The resulting circuit is a machine executable representation of the HLL srouce code (as opposed to a proof for verification purposes). Specific structures or *building blocks* are used to facilitate this conversion. In our example, the invention can be used to provide the first step in the construction of a pipeline which is arranged to implement a distributed verifiable computation system. Note, however, that we again point out that the invention is not limited to this use case and can be used to effect in a wider range of applications and contexts.

In order to describe an illustrative implementation, we provide an overview of a framework for verifiable computations, followed by an introduction to circuit representations of smart contracts in accordance with the present invention.

### Illustrative use: Verifiable Computation: framework

**Problem statement***.* A client sends the specification of a computation *P* and input *x* to an untrusted prover (*worker*). The worker computes an output *y* and returns it to the client. If *y = P(x),* then a correct prover should be able to produce a certificate of correctness and convince anyone (not just the client) of *y's* correctness. Otherwise, the verifier should reject *y* with high probability.

The protocol should be cheaper for the verifier than executing *P(x)*locally, or the protocol should handle computations *P* that the verifier could not execute itself. Moreover, no assumptions about the correctness of the worker's behaviour is needed.

**Data Access.** There are two distinct decentralized databases living in the system (i) *DHT -* off-chain data are stored on the DHT. Data are sufficiently randomized across the nodes and replicated to ensure high availability - and (ii) *Public ledger -* proofs of correct execution are stored on the blockchain and can be audited.

**Protocol.** The steps required by the protocol are depicted in figure 1. A computation *P* is represented by a circuit *C.* The client supplies the input *x*, and the worker executes the circuit 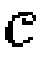 on the input *x* and claims the output is *y.* The prover is expected to obtain a valid transcript for {*C, x ,y*}. A valid transcript for {*C,x,y*} is an assignment of values to the circuit wires such that:
- the values assigned to the input wires are those of *x*;
- the intermediate values correspond to the correct operation of each gate in *C*;
- the values assigned to the output wires is 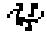 .

If the claimed output is incorrect, i.e. 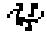 ≠ 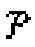 (*x*), then a valid transcript for { 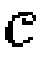 *,x,y*} does not exist.

The setup phase involves writing contracts in a formal language with a precise semantics. In accordance with the present invention, the interpreter takes as input the source code and produces an arithmetic circuit 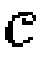 which consists of wires that carry values from a field 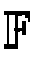 and connect to addition and multiplication gates. In some embodiments, arithmetic circuit optimisation techniques such as those described in U.K. Pat. Application No. 1718505.9 may be utilized in order to reduce the required resources necessary during determination of an outcome of the smart contract.

From the circuit 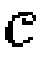 , the system generates a quadratic program *Q,* i.e. 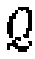 contains a set of polynomials that provides a complete description of the original circuit *C.* Then, the public parameters to be used by all provers and verifiers are generated.

A public evaluation key *EK* and the public verification key *VK* are derived using a secret value *s* selected by the client. The worker uses these public information to evaluate the computation on a particular input *x*. The output *y*, the values of the internal circuit wires and *EK* are used to produce the proof-of-correctness π. The proof *π* can be stored on the blockchain and verified by multiple parties without requiring the prover to separately interact with each of these entities.

All the bitcoin nodes can validate the payment transaction using the public verification key VK and the proof π, thus validating the contract.

### Smart Contracts and Circuit Representation

Although domain-specific languages (DSL) are required to implement a smart contract, e.g. Actulus Modeling Language (AML), Digital Asset Modeling Language (DAML), Financial Products Markup Language (FpML), for the sake of simplicity of illustration we describe herein the use of a more generic language able to provide a higher range of types, operators and constructs such as the High Level Language (HLL), C. The invention can be arranged, however, to convert different DSL languages to C (or another HLL) using dedicated tools.

In the example used herein, the interpreter processes source code written in C. The invention could be adapted to work with other High Level Languages (which may also be referred to as "general-purpose languages" (GPLs). Examples of general-purpose programming languages include Ada, ALGOL, Assembly language, BASIC, Boo, C, C++, C#, Clojure, COBOL, Crystal, D, Dart, Elixir, Erlang, F#, Fortran, Go, Harbour, Haskell, Idris, Java, JavaScript, Julia, Lisp, Lua, Modula-2, NPL, Oberon, Objective-C, Pascal, Perl, PHP, Pike, PL/I, Python, Ring, RPG, Ruby, Rust, Scala, Simula, Swift, and Tcl.

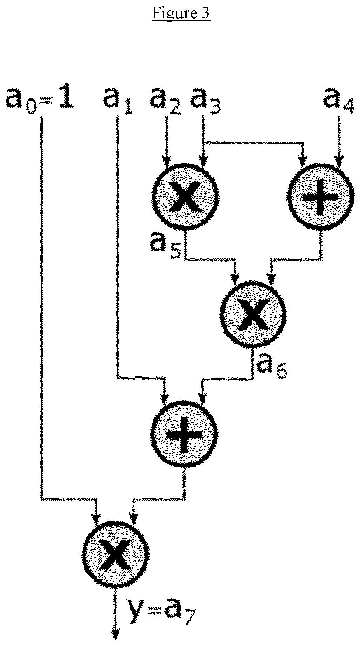

A comprehensive pipeline for the translation of a high-level language to a logic circuit is shown in Figure 2. In accordance with the present invention we focus on the module highlighted in the dotted line box in Figure 2.
- The high-level C program containing the contract and the required external libraries are linked together to make the *stand-alone* pre-processed contract. In this stage, the C pre-compiler is responsible for checking that all the required resources are available. Pre-processor directives are also evaluated.
- Constant expressions are evaluated and all symbols are registered. The outcome is a set of *expressions* of C-like operators, such as addition (+), multiplication (*), comparison (<), equality (==), conditional statements (?, :) and logic operators (and, or, not, xor). We require the main function to have a predefined name and format. The arithmetic circuit (see Figure 3) is built by representing symbols with *n*-bit wires connected to elementary arithmetic gates, e.g. addition and multiplication.
- The polynomials in the Quadratic Arithmetic Program (QAP) are defined in terms of their evaluations at the roots of the arithmetic circuit as introduced in Gennaro, R., et al (2013) Quadratic Span Programs and Succinct NIZKs Without PCPs*.*

Figure 3 shows an example of an arithmetic circuit. Each wire comes from, and all operations are performed over, a field F. This circuit computes *y =x₁ + x₂ · x₃ · (x₃ + x₄)*. Since the final output of the circuit is a sum, an additional multiplication gate (multiply by constant one) is required.

### C-Language Interpreter

In accordance with one illustrative embodiment of the invention, we now describe an interpreter able to recognize a subset of instructions defined for the C programming language, including: pre-processor directives, conditionals, arithmetic and bitwise Boolean operators, global functions. Support for arrays and structs can be also provided with no extra logic, as readily understood by the skilled person.

The interpreter enhances expression into the arithmetic gate language using multiplications, additions and specific building blocks presented in the section below entitled "Generation of arithmetic primitives". Each wire will have a specified bit-width. In case of 1-bit width, the wire represents a binary variable.

### Arithmetic enhancement of C-Like Programs for Implementation on a Blockchain

We now detail the process for the construction of an arithmetic circuit representing the functionality expressed by a C source code. At each stage of the process, an unexpected behaviour (e.g. missing symbol, wrong syntax or unknown operator) will result in the immediate termination of the program execution with an appropriate code error.

### Pre-Processing

As shown in Figure 2, a smart contract may consist of multiple files and libraries. The first step of the protocol involves the creation of a *single source file* containing the full set of instructions required to implement the contract. The individual sub-steps can be listed as follows:
- All comments are removed.
- Headers declarations are imported from the header files to the source files.
- All source files are merged.
- Pre-processor C directives and macros are solved or evaluated. They include #define directives and conditional #ifdef directives.

At the end of this step, the actual value of all pre-processor constants must be known. The value of the variables used in the source code must depend ***only*** on the values of the inputs of the contract. Moreover, the declaration of the *entry point* in the source code must have the following syntax:

| |
|---|
| void contract(inputType *in, outputType *out) |

Types inputType and outputType are defined by the user. The following source code box shows a simple example of a smart contract containing a single sum operation between two unsigned integer inputs.

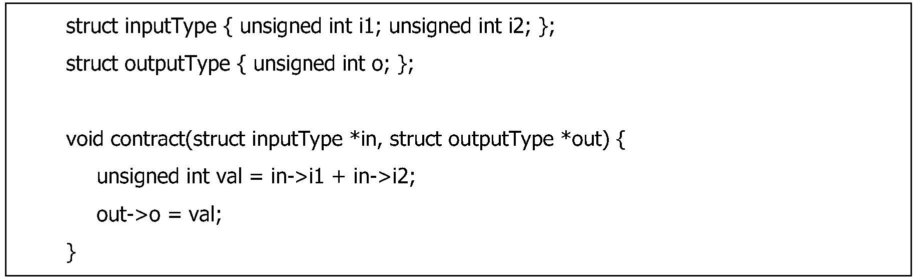

The output can be represented by different types of variables, depending on the specific contract. In the case above, a single output is simply connected to the result of the arithmetic operation.

### Integer and Real Numbers

In this illustrative embodiment, for the sake of simplicity, we assume that only operations between (signed or unsigned) integers are available. If this assumption is removed, the circuit building blocks (see Section "Generation of the arithmetic primitives") must be extended. Therefore, operations between real numbers must be converted into operations between integers. Let us consider the following portion of a contract:
*"Check if the average salary of the employees is greater than $32.5K. "*

This statement requires a division (by *N* employees) in order to compute the average value. However, the statement can be converted into the following expression between integers: ${\sum }_{i = 1}^{N} {s}_{i} > 32500 - N$

Where *sᵢ* represents the salary of the *i*-th employee.

### Creation of the Global Table of Symbols

In computer science, a *Table of Symbols* is a data structure used by a compiler/interpreter to associate each identifier (*symbol*) in the source code with information relating to its declaration. In this second step, the interpreter detects all the global symbols declared in the source file:
- Functions
- Structures (or classes)
   Note: The use of classes (OOP languages such as C++) requires additional logic to check the scope of *public*, *protected* and *private* sections.
- Constants
   (Global variables are also allowed but not recommended. The scope of *contract(...)* function should be treated as an independent black box. Its behaviour should not depend on external variables).

For each of these symbols, a hierarchy of local symbols representing the internal declarations of their identifiers is built. At the end of this stage, each global symbol (name, type and value) in the table can be directly addressed for further processing.

### Detection of the entry point of the contract

One of the global symbols must be the entry point of the contract (*Contract* function in "pre-processing" Section). Name, number and type of its parameters are checked against the expected syntax. Additional logic may consist in checking that all inputs structures are used within the contract and all output structures are linked to some portions of the contract.

### Line-by-line Evaluation

Each code line is analysed independently. Local symbols, representing the internal declarations of identifiers, are included in the hierarchy of the global table of symbols. In more detail, this stage is responsible for the following tasks:
- *Decoding of types*, including the declaration of structures and array, elementary types (Booleans, integers, etc.) and pointers.
- *Decoding of expressions*, e.g. unary or binary operations, constants, identifiers, data structures and function calls.
- *Evaluation of expressions,* i.e. evaluation of (numeric) expressions which do not depend on the input values.
- *Memory allocation,* i.e. temporary storage allocation for the data structures required by the contract functionality.

This stage links all the statements of the arithmetic expression from a *spatial* (i.e. memory used) and *temporal* (i.e. operators precedence) point of view. Therefore, each output variable is expressed as combination of logic and arithmetic operations applied on the input variables.

### Creation of the explicit arithmetic expressions

Using the data structures defined in the "line-by-line" Section, a generic arithmetic/logic expression e is collapsed in order to be represented in explicit form according to the following syntax: ${OP}_{N} \left({OP}_{N - 1}\left(…\left({OP}_{1}\left({OP}_{0}\right)\right)…\right)\right)$

According to this syntax, an arbitrary operator *OPᵢ₊₁* is applied to *e* after the operator *OPᵢ*.

For instance, given the following code:

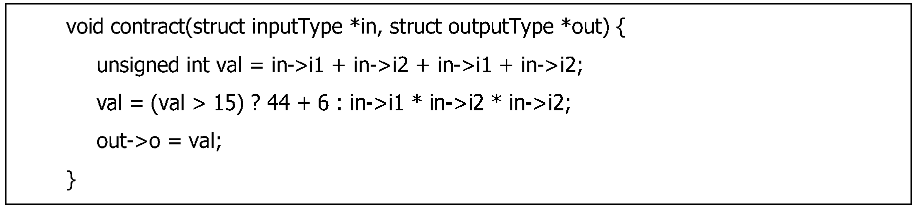

The explicit expression *e* can be represented as: ${out}_{0} = \left(?\left(<15\left(ADD\left(ADD\left(ADD {in}_{0} {in}_{1}\right){in}_{0}\right){in}_{1}\right)\right)50\left(MUL\left(MUL {in}_{0} {in}_{1}\right){in}_{1}\right)\right)$

As explained in Section "Generation of the arithmetic Primitives", the expression e is used to create the arithmetic primitives required to represent the contract functionality.

### Generation of the arithmetic primitives

At this stage, the interpreter is ready to make a one-to-one mapping between the operations used to generate the expression *e* and the structures required to implement these functionalities on circuit.

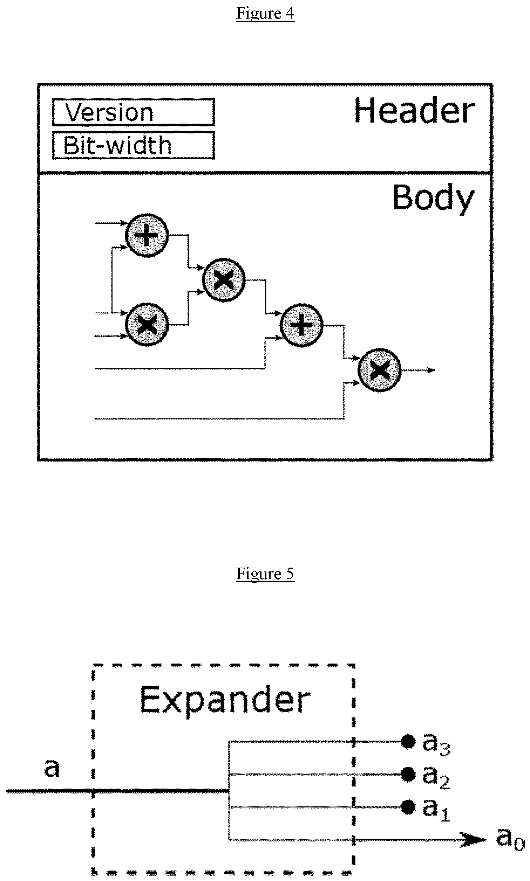

An important parameter required to create the circuit is the *bit-width **n_{bit}***, i.e. the number of bit used to represent a signed (or unsigned) integer number. Different computer architectures are characterised by different ***n_{bit}*** values. If a client does not know a preferred bit-width value of a worker, its value will be arbitrarily chosen and specified in the header of the circuit along with additional information, as shown in Figure 4. (Just as compilation is performed for a specific target architecture, knowing the bit-width value may result in a more efficient implementation and execution of the circuit).

The *version* field gives important information about the specific algorithm used to create a specific building block in the circuit. In our illustrative implementation we chose the two's complement binary representation of signed integers.

### Addition and multiplication operations

Addition and multiplication operations are mapped one-to-one into addition and multiplication gates in the circuit. Given two ***n***-bit wire inputs, an addition wire output requires ***n***+1 bit and a multiplication wire output requires 2***n*** bit. For instance, a multiplication between two ***n_{bit}*** wires *a* and *b* can be represented as:
MUL [idₐ id_{b}] TO [id_{c}]

(Every arithmetic or Boolean wire *x* in the circuit can be univocally identified by a value *idₓ*. As for binary variables, we start to count from value zero). The result *c* will be automatically represented on 2***n_{bit}*** bit.

### Boolean operations

The full set of Boolean gates can be computed using arithmetic gates. Given two Boolean values *a* and *b*, the following equivalences are valid:
- AND(*a*, *b*) = *ab*
- $NAND \left(a, b\right) = 1 - ab$
- $OR \left(a, b\right) = 1 - \left(1-a\right) \left(1-b\right)$
- $NOR \left(a, b\right) = \left(1-a\right) \left(1-b\right)$
- $XOR \left(a, b\right) = \left(1-a\right) b + \left(1-b\right) a$

Beside the XOR operator, each Boolean gate requires only one multiplication. All the arithmetic operations are perform on 1-bit width wires.

Bitwise Boolean operations on ***n***-bit width inputs require ***n*** 1-bit multiplications (for AND) or additions (for OR). Starting from the least significative output bit, each element is then multiplied by two and added to the next element to build the resulting ***n***-bit integer value (see Section "Wire Compression").

### Wire Expansion

Wire expansion is usually used to translate an arithmetic wire *a* to an ***nₐ***-bit output wire, where ***nₐ*** is the base-2 logarithm of the maximum value which can be expressed by *a*. For instance, let us consider the following portion of a contract:
*"Check if variable <a> is even."*

If ***nₐ*** = 4, this statement is implemented using the wire expansion as shown in Figure 5. Assuming that *a₀* represents the least significative bit of *a*, the output of the statement is equal to *a₀* itself. This circuit building block can be expressed as:
EXPAND [idₐ] TO [idₐ₃ idₐ₂ idₐ₁ idₐ₀]

Taking a closer look at the circuit, it is clear that only one bit of *a* is required for further processing, while the remaining 1-bit wires can be removed. The interpreter may generate only the individual 1-bit wires used in the rest of the contract. Figure 5 shows an implementation of a 4-bit wire expander representing the statement "Check if variable <a> is even".

The interpreter applies a specific syntax for the optimised wire expander:
EXPAND [idₐ] TO [0 -> idₐ₀]

That is, only the least significative 1-bit wire (i.e. identifier number zero) is taken, and identifier *idₐ₀* is assigned to it. The greater ***nₐ***, the more effective the optimisation may be. (In this context, we define *optimisation* as the possibility to save space to store or transmit the low-level directives used to represent the arithmetic circuit).

### Wire Compression

Wire compression is used to combine 1-bit wires *aᵢ* back to an ***nₐ***-bit output wire: $α = {\sum }_{i = 0}^{{n}_{a} - 1} {2}^{i} {a}_{i}$

This building block consist of additions and multiplications by constants, therefore the size of the QAP polynomial is not affected (See Genaro R., et al (2013) Quadratic Span Programs and Succinct NIZKs Without PCPs). Assuming that ***nₐ*** = 256 and identifiers in the range [*idₐ₀*, *idₐ₂₅₅*] are consecutive, an optimised way to represent this building block is the following:
COMPRESS [idₐ₀ : idₐ₂₅₅] TO [idₐ]

The resulting wire *a* will be then identified by *idₐ*.

### Negate Operation

The negate operation is necessary to compare two variables, since their difference can be compared to the value zero. Negating an ***n_{bit}***-bit wire can be implemented as multiplication by constant -1. This constant must be represented as: $- {1}_{{n}_{bit}} ≜ {\sum }_{i = 0}^{{n}_{bit} - 1} {2}^{1}$

### Equal To Zero Operation

This building block for an ***n_{bit}**-bit* wire *a* can be implemented as follows:
- Wire expansion on ***n_{bit}*** bit (*a₀*, *..., a_{nbit-1}*);
- Negate each 1-bit wire (*aᵢ* → *bᵢ*);
- Multiply the resulting *bᵢ* wires: $c = {\prod }_{i - 0}^{{n}_{bit} - 1} {b}_{2}$

Therefore, 1-bit variable c = 1 if and only if *a* = 0.

### Compare To Zero Operation

A *"greater than"* operation can be transformed in a *"lower than"* operation using simple equation rules. In the two's complement representation, this operations corresponds to check if the difference between two signed integers is positive or negative (or equal to zero in the case of *"lower or equal than"* operation). The discriminant of the sign of the difference *c = a - b* is given by the most significative bit *x* in the binary representation: negative numbers are characterised by *x* = 1, while positive numbers are characterised by *x* = 0:
EXPAND [id_{c}] TO [n_{bit} - 1 -> x]

Depending on the type of comparison (positive vs negative), the binary value *x* is required to be negated.

### Conditional Statement

A conditional statement in a high-level language can be expressed in the following form:
IF (*S_{c}*) *Sₐ* ELSE *S_{b}*

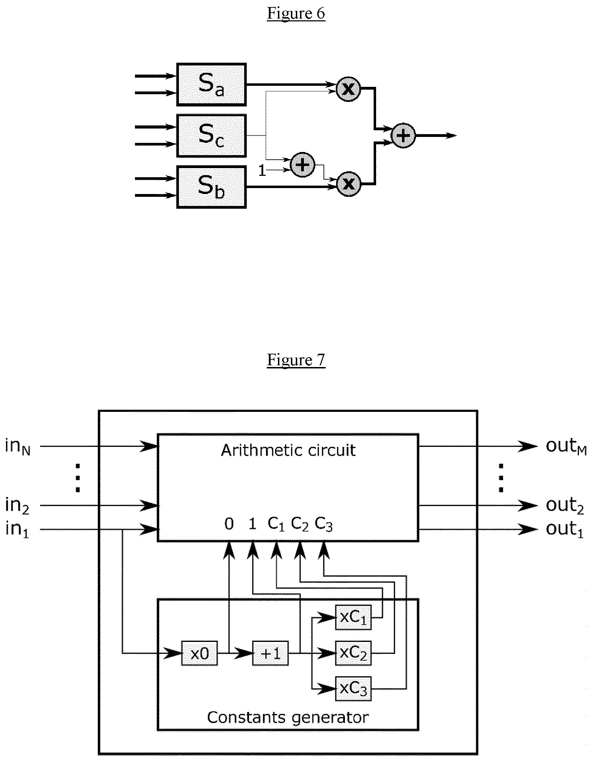

Since the statement *S_{c}* depends on the input of the contract, both branches *Sₐ* and *S_{b}* must be implemented in the circuit. The logic flow is depicted in Figure 6. Depending on the (binary) output of statement S_{c}, statement Sₐ or statement S_{b} will be executed. The binary operation x + 1 is used to negate x.

### Generation of constants

Constant values do not depend on the input wires of the circuit. Using dedicated unary multiplication gates in the form *mul-by-const-c*, we provide the following additional circuitry to generate the constant values required by the contract:
- The constant *zero* is computed by multiplying an input wire by zero. (The contract must have at least one input. Therefore, the input with identifier 1 (e.g. *in₁* in Figure 7) can be used to generate the constant zero).
- The constant *one* is computed by adding one to the constant *zero*.
- Any additional constant *cᵢ* is computed by using *mul-by-const-ci* on the constant *one*.

Since constants *zero* and *one* are always added to the circuit, the implementation of ***k*** arbitrary constants requires **k**+2 gates. This process is depicted in Figure 7. A constants generator module provided in accordance with an embodiment of the invention is responsible for the creation of the constants used by the arithmetic circuit. In the example, three constants (C₁, C₂ and C₃) plus default one (1) and zero (0) values are generated.

Constants have a known bit-width as specified by the two's complement standard.

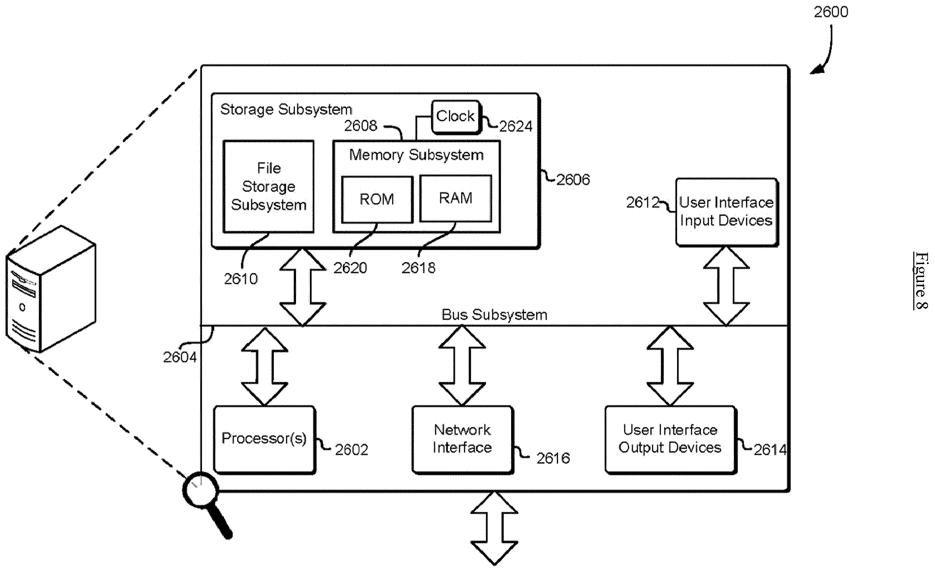

Turning now to Figure 8, there is provided an illustrative, simplified block diagram of a computing device 2600 that may be used to practice at least one embodiment of the present disclosure. In various embodiments, the computing device 2600 may be used to implement any of the systems illustrated and described above. For example, the computing device 2600 may be configured for use as a data server, a web server, a portable computing device, a personal computer, or any electronic computing device. As shown in Figure 8, the computing device 2600 may include one or more processors with one or more levels of cache memory and a memory controller (collectively labelled 2602) that can be configured to communicate with a storage subsystem 2606 that includes main memory 2608 and persistent storage 2610. The main memory 2608 can include dynamic random-access memory (DRAM) 2618 and read-only memory (ROM) 2620 as shown. The storage subsystem 2606 and the cache memory 2602 and may be used for storage of information, such as details associated with transactions and blocks as described in the present disclosure. The processor(s) 2602 may be utilized to provide the steps or functionality of any embodiment as described in the present disclosure.

The processor(s) 2602 can also communicate with one or more user interface input devices 2612, one or more user interface output devices 2614, and a network interface subsystem 2616.

A bus subsystem 2604 may provide a mechanism for enabling the various components and subsystems of computing device 2600 to communicate with each other as intended. Although the bus subsystem 2604 is shown schematically as a single bus, alternative embodiments of the bus subsystem may utilize multiple busses.

The network interface subsystem 2616 may provide an interface to other computing devices and networks. The network interface subsystem 2616 may serve as an interface for receiving data from, and transmitting data to, other systems from the computing device 2600. For example, the network interface subsystem 2616 may enable a data technician to connect the device to a network such that the data technician may be able to transmit data to the device and receive data from the device while in a remote location, such as a data centre.

The user interface input devices 2612 may include one or more user input devices such as a keyboard; pointing devices such as an integrated mouse, trackball, touchpad, or graphics tablet; a scanner; a barcode scanner; a touch screen incorporated into the display; audio input devices such as voice recognition systems, microphones; and other types of input devices. In general, use of the term "input device" is intended to include all possible types of devices and mechanisms for inputting information to the computing device 2600.

The one or more user interface output devices 2614 may include a display subsystem, a printer, or non-visual displays such as audio output devices, etc. The display subsystem may be a cathode ray tube (CRT), a flat-panel device such as a liquid crystal display (LCD), light emitting diode (LED) display, or a projection or other display device. In general, use of the term "output device" is intended to include all possible types of devices and mechanisms for outputting information from the computing device 2600. The one or more user interface output devices 2614 may be used, for example, to present user interfaces to facilitate user interaction with applications performing processes described and variations therein, when such interaction may be appropriate.

The storage subsystem 2606 may provide a computer-readable storage medium for storing the basic programming and data constructs that may provide the functionality of at least one embodiment of the present disclosure. The applications (programs, code modules, instructions), when executed by one or more processors, may provide the functionality of one or more embodiments of the present disclosure, and may be stored in the storage subsystem 2606. These application modules or instructions may be executed by the one or more processors 2602. The storage subsystem 2606 may additionally provide a repository for storing data used in accordance with the present disclosure. For example, the main memory 2608 and cache memory 2602 can provide volatile storage for program and data. The persistent storage 2610 can provide persistent (non-volatile) storage for program and data and may include flash memory, one or more solid state drives, one or more magnetic hard disk drives, one or more floppy disk drives with associated removable media, one or more optical drives (e.g. CD-ROM or DVD or Blue-Ray) drive with associated removable media, and other like storage media. Such program and data can include programs for carrying out the steps of one or more embodiments as described in the present disclosure as well as data associated with transactions and blocks as described in the present disclosure.

The computing device 2600 may be of various types, including a portable computer device, tablet computer, a workstation, or any other device described below. Additionally, the computing device 2600 may include another device that may be connected to the computing device 2600 through one or more ports (e.g., USB, a headphone jack, Lightning connector, etc.). The device that may be connected to the computing device 2600 may include a plurality of ports configured to accept fibre-optic connectors. Accordingly, this device may be configured to convert optical signals to electrical signals that may be transmitted through the port connecting the device to the computing device 2600 for processing. Due to the ever-changing nature of computers and networks, the description of the computing device 2600 depicted in FIG. 8 is intended only as a specific example for purposes of illustrating the preferred embodiment of the device. Many other configurations having more or fewer components than the system depicted in FIG. 8 are possible.

Further optional embodiments are set out by way of the following numbered clauses:
1. A computer-implemented method comprising the steps:
   processing a portion of source code to generate an arithmetic circuit, wherein:
   the source code is written in a high level programming language; and
   the arithmetic circuit comprises one or more arithmetic gates arranged to represent some or all of the functionality expressed in the source code.
2. A method according to clause 1 wherein:
   i) the arithmetic circuit is a machine executable version of the source code, and is arranged to compute a result; and/or
   ii) the source code is a smart contract.
3. A method according to clauses 1 or 2 wherein the processing step comprises: evaluating one or more constants provided in the source code to provide one or more expressions comprising Boolean and/or arithmetic operators.
4. A method according to any preceding clause and further comprising the step of: using the arithmetic circuit to provide a hardware and/or software circuit.
5. A method according to any preceding clause wherein:
   The arithmetic circuit comprises n-bit wires connected to arithmetic gates.
6. A method according to any preceding clause wherein:
   the arithmetic circuit is architecture independent.
7. A method according to any preceding clause wherein the method further comprises pre-processing of the source code to determine one or more constants, the pre-processing comprising one or more of the following steps:
   removing comments;
   importing header declarations from header files to the source files;
   merging multiple source files;
   solving or evaluating directive and macros.
8. A method according to any preceding clause wherein the method further comprises the step of detecting all global variables declared in the source code, wherein a global variable relates to a function, a structure or class, a constant and/or an entry point for execution.
9. A method according to any preceding clause wherein the method further comprises the step of:
   generating a table of symbols to associate each symbol (i.e. identifier) provided in the source code with declaration information provided in the source code, the symbols in the table being global and or local symbols.
10. A method according to any preceding clause wherein the method further comprises the step of performing a line-by-line evaluation of the source code which results in an arithmetic and/or logic expression which expresses one or more out variables as a combination of logic and/or arithmetic operations applied on one or more input variables.
11. A method according to clause 10 wherein the line-by-line evaluation comprises the sub-steps of:
   decoding of types;
   decoding of expressions;
   evaluation of expressions; and/or
   allocation of memory for data structures required by said functionality.
12. A method according to clause 10 or 11 and further comprising the step of:
   mapping the arithmetic and/or logic operations of the expression to arithmetic gates.
13. A method according to clause 12 wherein the mapping step comprises the sub-step of:
   performing a wire expansion; and/or
   performing a wire compression.
14. A method according to any preceding clause and further comprising the step:
   using the arithmetic circuit to generate a quadratic program comprising a set of polynomials which provide a description of the circuit.
15. A method according to clause 14 and further comprising the step:
   providing the quadratic program to an entity for execution of the quadratic program using one or more inputs.
16. A computer-implemented system arranged to perform the steps of any preceding clause, preferably wherein the system comprises an interpreter arranged to perform the processing of the source code.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

All references, including publications, patent applications, and patents, cited herein are hereby incorporated by reference to the same extent as if each reference were individually and specifically indicated to be incorporated by reference and were set forth in its entirety herein. This includes UK patent application numbers: GB1719998.5, GB 1718505.9, GB 1720768.9

Further exemplary embodiments of the present disclosure are set out in the following numbered clauses:
Numbered clause 1. A computer-implemented method comprising the steps:
   processing a portion of source code to generate an arithmetic circuit, wherein:
   the source code is written in a high level programming language; and
   the arithmetic circuit comprises one or more arithmetic gates arranged to represent some or all of the functionality expressed in the source code, wherein the arithmetic circuit comprises n-bit wires connected to arithmetic gates, wherein the output of one or more circuit wires and a public evaluation key EK are used to produce a proof of correctness.
Numbered clause 2. The method of Clause 1, wherein the proof of correctness is stored on the blockchain.
Numbered clause 3. The method of Clause 1 wherein the public evaluation key EK is derived using a secret value and/or wherein a public verification key is derived using a secret value.
Numbered clause 4. A method according to clause 1 and further comprising the step of:
   using the arithmetic circuit to provide a hardware and/or software circuit.
   and/or wherein:
   the arithmetic circuit comprises n-bit wires connected to arithmetic gates.
Numbered clause 5. A method according to clause 1 wherein:
   the arithmetic circuit is architecture independent.
Numbered clause 6. A method according to clause 1 wherein the method further comprises pre-processing of the source code to determine one or more constants, the pre-processing comprising one or more of the following steps:
   removing comments;
   importing header declarations from header files to the source files;
   merging multiple source files;
   solving or evaluating directive and macros.
Numbered clause 7. A method according to clause 1 wherein the method further comprises the step of detecting all global variables declared in the source code, wherein a global variable relates to a function, a structure or class, a constant and/or an entry point for execution.
Numbered clause 8. A method according to clause 1 wherein the method further comprises the step of:
   generating a table of symbols to associate each symbol (i.e. identifier) provided in the source code with declaration information provided in the source code, the symbols in the table being global and or local symbols.
Numbered clause 9. A method according to clause 1 wherein the method further comprises the step of performing a line-by-line evaluation of the source code which results in an arithmetic and/or logic expression which expresses one or more out variables as a combination of logic and/or arithmetic operations applied on one or more input variables.
Numbered clause 10. A method according to clause 9 wherein the line-by-line evaluation comprises the sub-steps of:
   decoding of types;
   decoding of expressions;
   evaluation of expressions; and/or
   allocation of memory for data structures required by said functionality.
Numbered clause 11. A method according to clause 9 and further comprising the step of: mapping the arithmetic and/or logic operations of the expression to arithmetic gates.
Numbered clause 12. A method according to clause 11 wherein the mapping step comprises the sub-step of:
   performing a wire expansion; and/or
   performing a wire compression.
Numbered clause 13. A method according to clause 1 and further comprising the step: using the arithmetic circuit to generate a quadratic program comprising a set of polynomials which provide a description of the circuit.
Numbered clause 14. A method according to clause 13 and further comprising the step: providing the quadratic program to an entity for execution of the quadratic program using one or more inputs.
Numbered clause 15. A computer-implemented system arranged to perform the steps of any of Clauses 1 to 14, preferably wherein the system comprises an interpreter arranged to perform the processing of the source code.

## Claims

1. A computer-implemented method comprising the steps:
processing a portion of source code to generate an arithmetic circuit, wherein:
the source code is written in a high level programming language; and
the arithmetic circuit comprises one or more arithmetic gates arranged to represent some or all of the functionality expressed in the source code, wherein the arithmetic circuit comprises n-bit wires connected to arithmetic gates, wherein the arithmetic circuit is represented using a directed acyclic graph.

2. The method of claim 1, wherein the directed acyclic graph comprises a plurality of nodes wherein each node represents a variable.

3. The method of claim 1 or 2, wherein a public evaluation key is derived using a secret value and/or wherein a public verification key is derived using a secret value.

4. The method according to any preceding claim, further comprising the step of using the arithmetic circuit to provide a hardware and/or software circuit and/or wherein the arithmetic circuit comprises n-bit wires connected to arithmetic gates.

5. The method according to any preceding claim, wherein the arithmetic circuit is architecture independent.

6. The method according to any preceding claim, wherein the method further comprises preprocessing of the source code to determine one or more constants, the pre-processing comprising one or more of the following steps:
removing comments;
importing header declarations from header files to the source files;
merging multiple source files;
solving or evaluating directive and macros.

7. The method according to any preceding claim, wherein the method further comprises the step of detecting all global variables declared in the source code, wherein a global variable relates to a function, a structure or class, a constant and/or an entry point for execution.

8. The method according to any preceding claim, wherein the method further comprises the step of generating a table of symbols to associate each symbol (i.e. identifier) provided in the source code with declaration information provided in the source code, the symbols in the table being global and or local symbols.

9. The method according to any preceding claim, wherein the method further comprises the step of performing a line-by-line evaluation of the source code which results in an arithmetic and/or logic expression which expresses one or more out variables as a combination of logic and/or arithmetic operations applied on one or more input variables.

10. The method according to claim 9, wherein the line-by-line evaluation comprises the sub-steps of:
decoding of types;
decoding of expressions;
evaluation of expressions; and/or
allocation of memory for data structures required by said functionality.

11. The method according to claim 9, further comprising the step of mapping the arithmetic and/or logic operations of the expression to arithmetic gates.

12. The method according to claim 11, wherein the mapping step comprises the sub-step of:
performing a wire expansion; and/or
performing a wire compression.

13. The method according to any preceding claim, further comprising the step of using the arithmetic circuit to generate a quadratic program comprising a set of polynomials which provide a description of the circuit.

14. The method according to claim 13, further comprising the step of providing the quadratic program to an entity for execution of the quadratic program using one or more inputs.

15. A computer-implemented system arranged to perform the steps of claim 1, wherein the system comprises an interpreter arranged to perform the processing of the source code.
